Europäisches Patentamt

European Patent Office

Office européen des brevets

(19)

(11) Numéro de publication : **0 121 479**
**B1**

## (12) FASCICULE DE BREVET EUROPÉEN

(45) Date de publication du fascicule du brevet :
21.01.87

(21) Numéro de dépôt : 84400642.9

(22) Date de dépôt : 30.03.84

(51) Int. Cl.⁴ : **B 60 J 1/02**, B 60 R 13/06

(54) **Vitrage de sécurité, et notamment pare-brise pour véhicules automobiles.**

(30) Priorité : 31.03.83 FR 8305326
31.03.83 FR 8305328

(43) Date de publication de la demande :
10.10.84 Bulletin 84/41

(45) Mention de la délivrance du brevet :
21.01.87 Bulletin 87/04

(84) Etats contractants désignés :
AT BE CH DE FR GB IT LI LU NL SE

(56) Documents cités :
FR-A- 2 000 890
FR-A- 2 020 588
FR-A- 2 111 646
FR-A- 2 188 025
US-A- 1 694 676
US-A- 2 552 955
US-A- 3 756 881

(73) Titulaire : SAINT-GOBAIN VITRAGE
Les Miroirs 18, avenue d'Alsace
F-92400 Courbevoie (FR)
BE CH FR GB IT LI LU NL SE AT
VEGLA Vereinigte Glaswerke GmbH
Viktoriaallee 3-5
D-5100 Aachen (DE)
DE

(72) Inventeur : Kunert, Heinz
Am Krieler Dom 23
D-5000 Koln 41 (DE)

(74) Mandataire : Leconte, Jean-Gérard et al
Saint-Gobain Recherche 39, Quai Lucien Lefranc
F-93304 Aubervilliers Cedex (FR)

## Description

La présente invention a pour objet un nouveau vitrage de sécurité, destiné notamment à être utilisé comme pare-brise pour véhicules automobiles.

La description suivante évoquera le cas des pare-brise pour véhicules, mais il va de soi que l'invention peut également concerner les vitrages de sécurité destinés à être montés dans n'importe quelle baie de véhicule ou de bâtiment.

Actuellement, les pare-brise couramment utilisés sont des vitrages de sécurité dit « feuilletés », c'est-à-dire formés de deux ou plusieurs feuilles de verre collées par une ou des feuilles intercalaires plastiques, cet intercalaire étant généralement une feuille de polyvinylbutyral.

Par souci de simplification, la description suivante se référera aux vitrages feuilletés simples, c'est-à-dire aux vitrages comportant deux feuilles de verre collées par une feuille intercalaire plastique, sans pour autant exclure du cadre de l'invention d'autres types de vitrages feuilletés.

De même que les autres matières plastiques utilisables dans cette application, le polyvinylbutyral est connu pour sa sensibilité à l'humidité. Lorsque de la vapeur d'eau diffuse du bord du vitrage dans la feuille intercalaire, la matière plastique qui la constitue absorbe l'eau. Il se produit alors une diminution de l'adhérence de l'intercalaire au verre. Il apparaît en outre au niveau de la périphérie des phénomènes d'opacification du vitrage. Cette absorption d'eau peut se produire aussi bien avant le montage du pare-brise dans la carrosserie du véhicule, par exemple au cours du transport depuis l'atelier de fabrication jusqu'au lieu de montage, que pendant le stockage. Mais la diffusion de l'eau peut également avoir lieu quand le vitrage est déjà monté dans la carrosserie, si on ne s'est pas assuré que l'étanchéité au niveau du châssis, est suffisante pour empêcher toute pénétration de l'humidité. Dans les pays tropicaux, par exemple, les pare-brise feuilletés sont à cet égard soumis à des conditions particulièrement sévères. Par suite, dans ces pays chauds et à haut degré d'humidité de l'air, les phénomènes mentionnés d'opacification et de décollage sont largement renforcés.

On connait dans l'état de la technique, par exemple par la publication de brevet français FR-A-2 111 616 une structure particulière de vitrage dans laquelle les bords de la feuille de verre dirigée vers l'intérieur de l'habitacle du véhicule (ci-après dénommé feuille intérieure) sont décalés vers l'intérieur par rapport aux bords de la feuille de verre dirigée vers l'extérieur (ci-après dénommée feuille extérieure). On y décrit notamment un pare brise qui forme une structure en gradin, ou en marches d'escalier, à sa périphérie. La feuille intérieure ayant des dimensions plus petites que la feuille extérieure, un espace est réservé entre la région périphérique de la feuille extérieure et le pourtour de la feuille intercalaire en matière plastique et de la feuille intérieure, la feuille intercalaire ayant des dimensions identiques ou plus faibles que la feuille intérieure. Lorsque la feuille intercalaire a des dimensions plus faibles que la feuille intérieure, il est possible que la vapeur d'eau mette davantage de temps à diffuser dans l'intercalaire, mais les risques de détériorations ne sont pas supprimés. Aucun moyen spécifique pour rendre étanche les bords du vitrage n'est prévu dans cette structure.

L'invention vise à fournir des vitrages, notamment des pare-brise feuilletés, dont les bords sont rendus aussi étanches que possible vis-à-vis de l'humidité susceptible de pénétrer dans l'intercalaire plastique, que ce soit avant le montage du pare-brise dans la carrosserie du véhicule ou après. Simultanément, les moyens d'étanchéité proposés facilitent et simplifient l'installation du vitrage dans la baie, notamment son montage par collage.

En vue d'atteindre le but de l'invention, on fabrique des vitrages feuilletés qui sont tels que les bords de la feuille de verre dirigée vers l'intérieur de l'habitacle du véhicule (ci-après dénommée feuille intérieure) sont décalés vers l'intérieur par rapport aux bords de la feuille de verre dirigée vers l'extérieur (ci-après dénommée feuille extérieure). Autrement dit, la feuille de verre intérieure présente des dimensions plus petites que la feuille de verre extérieure, et est collée à cette dernière en formant une structure en gradin ou en marches d'escalier, sur la périphérie, la feuille intercalaire ayant la même dimension ou une dimension plus petite que la feuille intérieure. La caractéristique apportée par l'invention est que ces vitrages comprennent une bande périphérique en un matériau opaque aux rayonnements UV déposée sur le pourtour de la face interne de la feuille de verre de plus grande dimension, c'est-à-dire la feuille de verre extérieure, et sur cette bande se trouve un cordon continu qui prend place dans le gradin et qui comprend une matière adhésive qui empêche la diffusion de la vapeur d'eau dans la feuille intercalaire. Les dimensions du cordon sont telles qu'il puisse servir, lors du montage du pare-brise dans la carrosserie, à sa fixation par collage sur un repli de la tôle de la carrosserie prévu à cet effet. Il est également essentiel que le cordon soit au contact des bords de la feuille de verre intérieure, afin d'assurer l'étanchéité désirée.

On peut déposer le cordon d'adhésif dans la « marche » ou « gradin » tout de suite après la fabrication du pare-brise dans l'atelier de fabrication. De cette façon, il assure aussitôt une totale étanchéité de la feuille de plastique intercalaire vis-à-vis de l'atmosphère. Ainsi, non seulement on évite à coup sûr toute altération de la feuille intercalaire par absorption éventuelle d'humidité pendant le transport et le stockage, mais également on protège les arêtes du vitrage, du moins au niveau de la plus petite feuille de verre. Une telle protection est particulièrement avantageuse puisque ces feuilles de verre plus petites sont généralement plus minces et par conséquent extrêmement sensibles aux détériorations mécaniques.

Pour que le cordon puisse servir directement au montage par collage du vitrage dans une baie de carrosserie, il convient qu'il déborde en épaisseur de la feuille de verre la plus petite. Grâce à une telle structure, le cordon sert avantageusement en outre d'espaceur lors de l'empilement des vitrages.

L'invention présente également l'avantage, du fait de l'existence d'une « marche » entre les deux feuilles de verre, remplie d'un adhésif qui déborde sur la feuille de verre de dimensions inférieures, de permettre de diminuer la profondeur du repli de la tôle de carrosserie destiné à recevoir le vitrage. En effet, il est toujours nécessaire d'utiliser une épaisseur minimale d'adhésif pour assurer une liaison solide entre le vitrage et la carrosserie.

Grâce à l'invention, pour une épaisseur conservée d'adhésif, la profondeur du repli peut être diminuée de l'épaisseur cumulée de la feuille intercalaire et de la feuille de verre intérieure. Non seulement on peut ainsi économiser de la tôle, mais surtout augmenter l'angle de vision disponible pour le conducteur.

Selon une forme préférée de l'invention, le cordon-d'adhésif est recouvert d'une feuille ou d'une bande de protection, par exemple en papier qu'on arrache juste avant de monter le pare-brise dans la carrosserie.

La bande en matériau opaque qui est déposée sur la périphérie de la face interne de la feuille de verre extérieure du vitrage peut par exemple se composer d'une couche d'émail, imprimée puis cuite sur le verre. Cette bande non seulement cache à la vue d'un observateur extérieur la couche adhésive qui la recouvre, mais avantageusement elle améliore en outre l'adhérence de la colle sur la feuille de verre.

La suite de la description fera référence aux dessins annexés dans lesquels :

la figure 1   représente une vue en coupe d'un vitrage feuilleté selon l'invention dans une première forme de réalisation,

les figures 2 et 3   illustrent deux autres formes de réalisation de vitrage selon l'invention selon le même mode de représentation,

la figure 4   représente un pare-brise en verre feuilleté selon l'invention après son montage dans la baie d'une carrosserie d'automobile

la figure 5   illustre une autre forme de réalisation d'un vitrage selon l'invention.

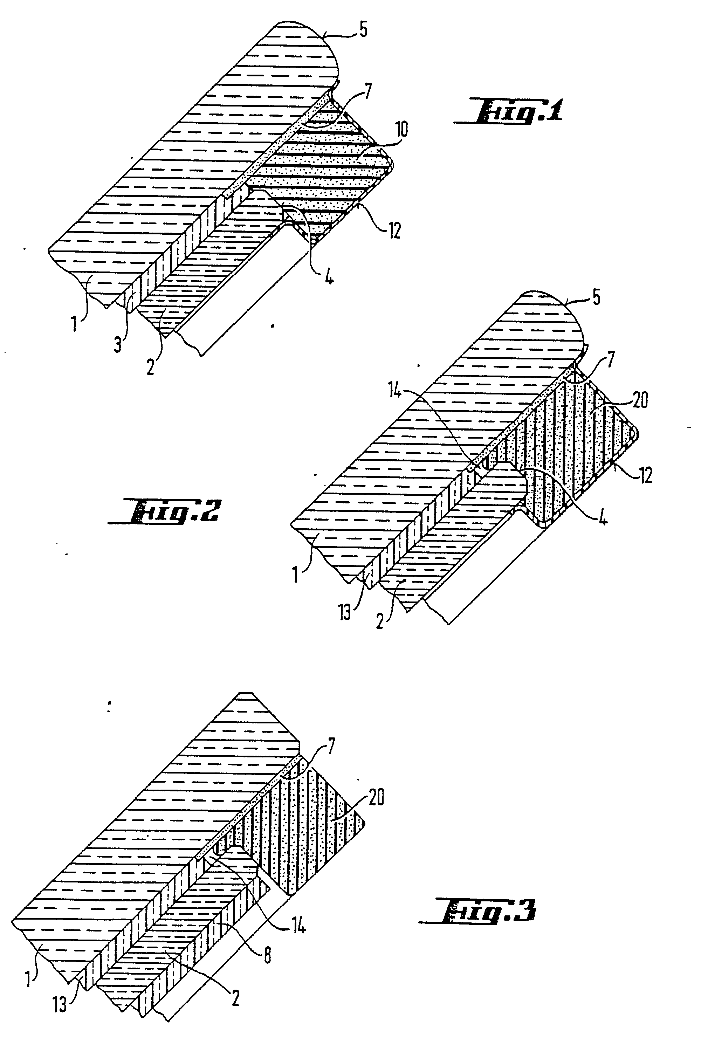

Le vitrage en verre feuilleté représenté à la figure 1 comprend une feuille de verre 1 qui après montage constitue la feuille de verre dirigée vers l'extérieur, et une feuille 2 qui après montage est dirigée vers l'intérieur de l'habitacle du véhicule. En général, la feuille 2 est plus mince que la feuille 1. Les deux feuilles 1 et 2 sont collées par une feuille intercalaire en matière plastique 3. La feuille 2 est plus petite que la feuille 1 de sorte qu'il y a une différence de 1 à 2 cm environ entre leurs tranches respectives 4 et 5. La feuille en matière plastique 3, en polyvinylbutyral ou tout autre matériau comparable, a les mêmes dimensions que la feuille 2 et leurs tranches sont dans un même plan.

Sur le pourtour de la face de la feuille de verre 1 dirigée vers la feuille intercalaire 3, qui dépasse de la feuille de verre 2, est déposée une couche 7 de couleur opaque, par exemple une pâte noire thermodurcissable. On trouve dans le commerce de telles pâtes convenant pour l'application envisagée. Parmi les pâtes disponibles, on en choisit une qui présente une bonne adhérence à la colle utilisée. On peut le cas échéant, avant d'appliquer la pâte sur la feuille de verre, la mélanger à des additifs connus en soi qui améliorent l'adhérence. On applique la pâte de façon connue, par exemple par sérigraphie. Selon une forme préférée de l'invention, on utilise une pâte qu'on applique sur la feuille de verre avant le bombage et que l'on cuit au cours de cette opération grâce à la température élevée nécessaire à cet effet.

On remplit le gradin défini par la tranche 4 de la feuille de verre 2 et la couche 7 avec un cordon d'adhésif 10 qui peut être par exemple directement injecté dans cet espace au moyen d'une buse d'injection. On dépose éventuellement une couche de fond, ou primaire d'adhérence, sur la couche opaque 7, avant le dépôt du cordon adhésif. On applique la matière adhésive pour obtenir un cordon 10 qui déborde en épaisseur par rapport à la surface de la feuille de verre 2 et peut ainsi servir directement à la fixation du vitrage sur la carrosserie. Avantageusement, le cordon d'adhésif se compose d'une matière qui conserve un certain temps son aptitude à la déformation plastique, et ne durcit qu'après le montage du pare-brise dans la baie. On peut obtenir un tel résultat par exemple en recouvrant le cordon d'adhésif après son dépôt d'une feuille de protection 12 étanche à l'air.

Le cordon d'adhésif 10 peut aussi se composer d'une matière qui durcit après application, mais qui toutefois peut être ramollie juste avant le montage du pare-brise. Il peut par exemple s'agir d'une matière thermoplastique que l'on chauffe à sa température de ramollissement avant le montage du pare-brise. De même, on peut utiliser des adhésifs susceptibles d'être ramollis ou activés par traitement avec un plastifiant ou un solvant.

Selon un procédé particulièrement adapté pour l'installation de tels pare-brise, on peut, avant le montage du pare-brise dans la baie, déposer sur le repli de la tôle prévu pour recevoir le pare-brise ou sur le cordon d'adhésif lui-même, une couche de colle qui à elle seule plastifie le cordon d'adhésif tout en étant apte à y adhérer, si bien qu'il se forme une liaison durable et étanche entre cette couche de colle plastifiante, le cordon d'adhésif et le repli de la baie de la carrosserie.

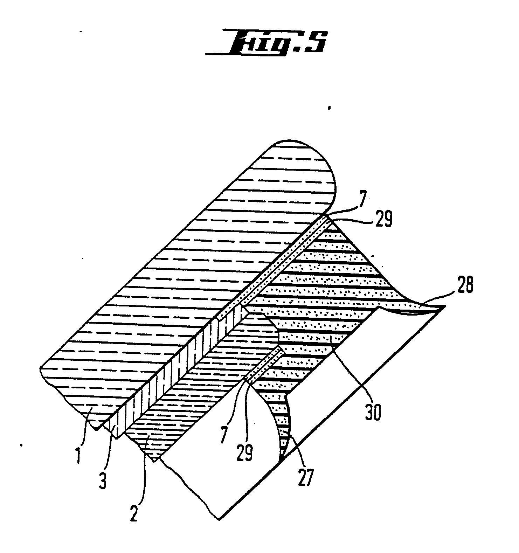

La forme de réalisation représentée à la figure 5 permet un mode de fixation encore plus avantageux du vitrage dans une baie de carrosserie : le vitrage comprend, comme dans la figure 1, une feuille de verre 1 et une feuille de verre 2 de dimensions différentes et collées par une feuille intercalaire 3. Une couche opaque 7 est déposée sur le pourtour de la feuille 1, de la façon décrite en relation avec la figure 1. On a déposé également une couche sur le bord de la feuille 2 de façon à cacher totalement un cordon d'adhésif 30. On dépose un primaire d'adhérence 29 tel que décrit dans le brevet US-A-3 779 794, sur la couche opaque 7. Dans cette réalisation, le cordon d'adhésif 30 a un profil particulier : il recouvre partiellement le pourtour des deux feuilles de verre 1 et 2 et présente en direction de l'intérieur de l'habitacle du véhicule deux languettes 27 et 28. Ce cordon est en un matériau qui durcit très rapidement après son dépôt par exemple en un prépolymère de polyuréthane. Il sert alors uniquement d'intermédiaire pour le montage ultérieur du vitrage dans une baie. Au moment du montage dans la baie de carrosserie, on dépose, par exemple par extrusion, entre les languettes 27 et 28 une autre portion de cordon, en un matériau compatible avec la première portion. Grâce à la présence des languettes 27 et 28 qui limitent la quantité du deuxième cordon déposé, on économise de la matière. La durée du montage du vitrage est en outre réduite : en effet, pour une épaisseur de cordon identique à celle utilisée dans le mode de réalisation décrit en relation avec la figure 1, par exemple, on en extrude une quantité de matière réduite de moitié environ, au moment de l'assemblage du vitrage dans la baie de carrosserie. Cette quantité moindre de matière sèche plus rapidement.

Cette forme de réalisation peut trouver par ailleurs des variantes non représentées : la portion de cordon munie des languettes peut par exemple ne pas chevaucher les deux feuilles de verre, mais s'arrêter au bord de la feuille de verre intérieure. On peut aussi déposer un premier cordon muni d'une seule languette, disposée vers l'intérieur du vitrage, et servant à éviter le débordement du deuxième cordon.

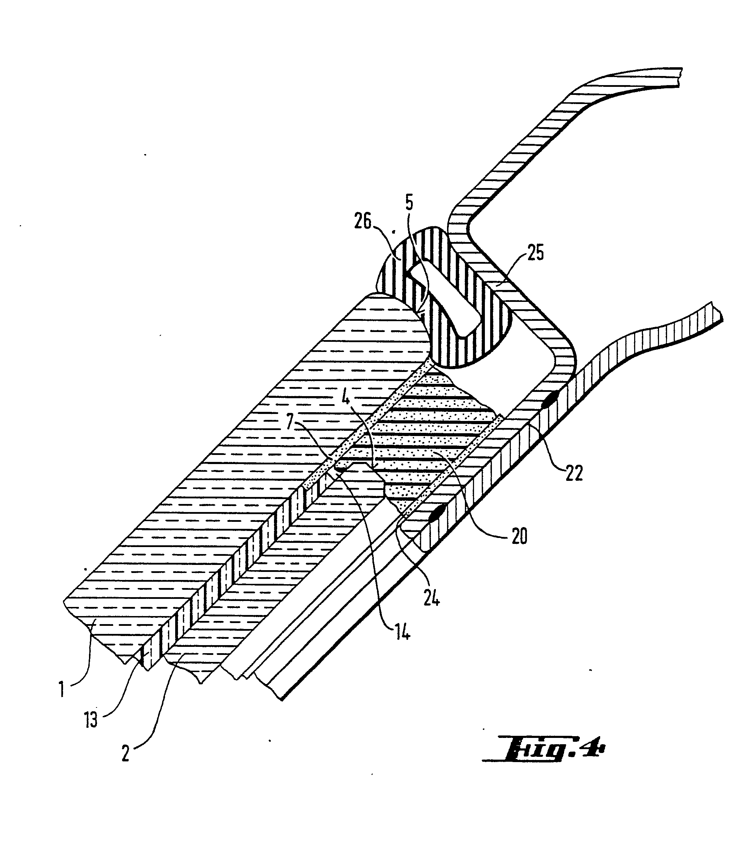

Dans la forme de réalisation représentée à la figure 2, la feuille intercalaire 13 présente des dimensions inférieures à celles de la feuille de verre 2. Son bord est décalé de quelques millimètres par rapport à la tranche 4 de la feuille de verre 2. Il en résulte la création d'une rainure 14 autour de la feuille intercalaire 13 et entre les deux feuilles de verre 1 et 2, dans laquelle pénètre une partie de l'adhésif 20. La présence de cette rainure assure ainsi une étanchéité particulièrement bonne de la feuille intercalaire 13 vis-à-vis de l'atmosphère environnante, puisque l'adhésif faisant également office de joint d'étanchéité pénètre entre les deux feuilles de verre.

On choisit la matière constitutive du cordon 20 selon les mêmes critères que ceux mentionnés pour l'exemple de la figure 1.

Le vitrage feuilleté représenté à la figure 3 comprend également une première feuille de verre 1 dirigée vers l'extérieur et une deuxième feuille 2 dirigée vers l'intérieur de l'habitacle du véhicule, collées par une feuille intercalaire plastique 13, plus petite que la feuille 2. La feuille 2 est plus petite que la feuille 1. On dispose sur le pourtour de la face intérieure de la feuille 1 qui dépasse de la feuille 2 une couche opaque 7 par exemple en un émail noir. La feuille 2 est recouverte sur la face dirigée vers l'intérieur de l'habitacle du véhicule d'une feuille de protection 8 contre les éclats de verre, en polyuréthane souple, transparent, et possédant des propriétés autocicatrisantes. On dispose le cordon d'adhésif 20 dans l'espace libre ou gradin défini par la tranche de la feuille 2 et celle de la feuille 1. L'adhésif pénètre également dans la rainure 14 présente du fait de la taille réduite de la feuille plastique 13 par rapport à celle de la feuille 2.

Dans cette forme de réalisation, l'invention présente un avantage supplémentaire qui est d'une importance décisive pour le montage de tels pare-brise par simple collage. Il est en effet possible d'appliquer sur la couche opaque 7 une couche de fond, ou primaire d'adhérence, non représenté, avant d'appliquer le cordon d'adhésif 20 sans que pour cela la couche de fond vienne en contact de la pellicule de protection 8. Comme cela apparaît sur la figure 3, la feuille de protection 8 n'est en contact avec aucune des couches déposées sur la feuille 1.

Il s'est en effet avéré que la couche de fond exerce un effet très néfaste sur la pellicule de protection 8 lorsqu'elles sont au contact l'une de l'autre, ce qui est pratiquement inévitable avec les procédés usuels, lorsque les deux feuilles de verre ont la même dimension.

Les pare-brise selon l'invention conviennent particulièrement pour leur encastrement à fleur de carrosserie sans introduction de profilés supplémentaires ou d'éléments ornementaux recouvrant les bords du vitrage. Puisque la couche 7 masque déjà la couche d'adhésif, il n'est même plus nécessaire de la dissimuler par une ornementation extérieure. Il est néanmoins recommandé, puisque de cette façon la tranche 5 de la feuille de verre 1 est visible, de lui donner un profil arrondi.

La figure 4 représente un pare-brise tel que représenté à la figure 2 monté par collage dans une baie de carrosserie selon le procédé objet de l'invention. Ce procédé permet de monter un pare-brise tel que décrit précédemment dans une baie de carrosserie par collage sur un repli de la tôle de carrosserie à l'aide d'une couche de colle qui permet l'assujettissement à la carrosserie. Pour encastrer le pare-brise dans la baie de carrosserie on procède suivant l'invention de la façon suivante : on applique sur un repli 22 de la tôle de la carrosserie, ou directement sur le cordon adhésif 20 une couche de colle 24 relativement fine et contenant un solvant. On met en place le vitrage dans la baie et à ce moment le cordon adhésif 20 vient en contact avec ladite couche 24.

Ils réagissent de telle façon que le cordon se ramollit et peut ainsi s'adapter à des éventuelles irrégularités de la couche 24. Après durcissement, le cordon d'adhésif 20 a réalisé avec la couche 24 une liaison durable. Pour obturer l'interstice qui subsiste entre la tranche 5 du pare-brise et la portion de tôle 25 de la carrosserie, on coince entre les deux un joint creux élastique 26.

## Revendications

1. Vitrage feuilleté, notamment pare-brise pour véhicule automobile comprenant deux feuilles de verre (1, 2) collées par une feuille intercalaire plastique (13), les bords de la feuille intérieure (2) et de la feuille intercalaire étant décalés vers l'intérieur par rapport aux bords de la feuille extérieure (1), avec formation d'une structure en gradin, la feuille intercalaire ayant la même dimension ou une dimension plus petite que la feuille intérieure (2), caractérisé en ce que un cordon adhésif (10, 20, 30) est placé dans le gradin défini entre le bord de la feuille extérieure (1) et le bord de la feuille intérieure (2), une bande périphérique (7) en un matériau opaque est placée entre le pourtour intérieur de la feuille extérieure et le cordon adhésif, lequel est en une matière qui empêche la diffusion de vapeur d'eau dans la feuille intercalaire, et a des dimensions telles qu'il soit au contact des bords de la feuille intérieure (2) et qu'il puisse servir au montage par collage du vitrage dans la carrosserie.

2. Vitrage selon la revendication 1, caractérisé en ce que la bande (7) est constituée d'un émail que l'on peut déposer par sérigraphie.

3. Vitrage selon la revendication 2, caractérisé en ce que l'émail utilisé présente, vis-à-vis du cordon d'adhésif (10, 20, 30) des propriétés d'adhérence meilleures que celles du verre.

4. Vitrage selon l'une des revendications 1 à 3, caractérisé en ce que le cordon d'adhésif (10, 20, 30) se compose d'une matière synthétique susceptible d'être réactivée avant le montage du vitrage dans la carrosserie.

5. Vitrage selon l'une des revendications 1 à 4, caractérisé en ce que la bande (7) est recouverte d'un primaire d'adhérence (29), le cordon adhésif (30) recouvre éventuellement le pourtour de la feuille de verre (2), est un matériau qui durcit très rapidement après son dépôt, présente en direction de l'intérieur de l'habitacle du véhicule, deux languettes (27) et (28), et sert d'intermédiaire pour le montage par collage du vitrage dans une baie.

6. Vitrage selon l'une des revendications 1 à 5, caractérisé en ce que la feuille intercalaire plastique (13) disposée entre les deux feuilles de verre (1, 2) est plus petite que la feuille de verre (2), de sorte qu'il se forme une rainure (14) dans laquelle une partie du cordon d'adhésif (20) a migré.

7. Vitrage selon l'une des revendications 1 à 6, caractérisé en ce qu'on recouvre le cordon (10, 20, 30) d'une feuille de protection que l'on peut arracher.

8. Vitrage selon l'une des revendications 1 à 7, caractérisé en ce que la tranche (5) de la feuille de verre (1) présente un profil arrondi.

9. Procédé de montage d'un vitrage selon l'une des revendications 1 à 8 dans une baie de carrosserie, par collage sur un repli (22) de la carrosserie, à l'aide d'une couche de colle (24) qui permet l'assujettissement du vitrage à la carrosserie, caractérisé en ce que on applique la couche de colle sur le repli de la baie de carrosserie et/ou sur le cordon adhésif (10, 20, 30) on met en place le vitrage dans la baie, la couche de colle contenant un solvant et étant apte à adhérer au cordon, de sorte qu'elle ramollit le cordon et réalise avec lui une liaison durable.

## Claims

1. A laminated pane, notably a windscreen for a motor vehicle, comprising two glass sheets (1, 2) adhered together by a plastics intermediate sheet (13), the edges of the internal sheet (2) and the intermediate sheet being spaced towards the interior relative to the edges of the external sheet (1), forming a stepped structure, the intermediate sheet having the same or a smaller dimension than the internal sheet (2), characterised in that an adhesive strip (10, 20, 30) is placed in the step defined between the edge of the external sheet (1) and the edge of the internal sheet (2), a peripheral band (7) of an opaque material is placed between the internal periphery of the external sheet and the adhesive strip which is of a material which prevents diffusion of water vapour into the intermediate sheet, and has dimensions such that it is in contact with the edges of the internal sheet (2) and such that it may serve for mounting by adhesion of the pane in the vehicle bodywork.

2. A pane according to claim 1, characterised in that the strip (7) is formed of an enamel which may be deposited by silk screen printing.

3. A pane according to claim 2, characterised in that the enamel used has, relative to the adhesive strip (10, 20, 30), greater adhesive properties than those of the glass.

4. A pane according to one of claims 1 to 3, characterised in that the adhesive strip (10, 20, 30) is made of a synthetic material capable of being reactivated before mounting of the pane in the bodywork.

5. A pane according to one of claims 1 to 4, characterised in that the band (7) is covered with an adhesion primer (29) and the adhesive strip (30) which may cover the periphery of the glass sheet (2) is of a material which hardens very rapidly after its deposition, has two projections (27) and (28) extending towards the interior of the vehicle, and serves as an intermediate for mounting the pane in a window aperture by adhesion.

6. A pane according to one of claims 1 to 5, characterised in that the intermediate plastics sheet (13) arranged between the two glass sheets (1, 2) is smaller than the glass sheet (2), so that there is formed a groove (14) into which a part of the adhesive strip (20) has migrated.

7. A pane according to one of claims 1 to 6, characterised in that the strip (10, 20, 30) is covered by a protective layer which may be torn away.

8. A pane according to one of claims 1 to 7, characterised in that the edge (5) of the glass sheet (1) has a rounded cross-section.

9. A method of mounting a pane according to one of claims 1 to 8 in a bodywork aperture, by adhesion to a relief (22) in the bodywork, by means of an adhesive layer (24) which allows fixing of the pane to the bodywork, characterised in that the adhesive layer is applied to the relief of the bodywork aperture and/or to the adhesive strip (10, 20, 30) and the pane is positioned in the aperture, the adhesive layer containing a solvent and being capable of adhesion to the strip so that it softens the strip and forms a durable bond therewith.

**Patentansprüche**

1. Verbundglasscheibe, insbesondere Windschutzscheibe für Kraftfahrzeuge, aus zwei durch eine plastiche Zwischenschicht (13) miteinander verbundenen Einzelglasscheiben (1, 2), wobei die Randbereiche der inneren Einzelglasscheibe (2) und der Zwischenschicht gegenüber der Kanten der äußeren Einzelglasscheibe (1) unter Bildung eines stufenartigen Aufbaus nach innen versetzt sind und die Zwischenschicht die gleichen oder etwas geringere Abmessungen wie die innere Einzelglasscheibe (2) aufweist, dadurch gekennzeichnet, daß in der zwischen dem Randbereich der äußeren Einzelglasscheibe (1) und der Umfangsfläche der inneren Glasscheibe (2) gebildeten Stufe ein Kleberstrang (10, 20, 30), und zwischen dem inneren Randbereich der äußeren Einzelglasscheibe und dem Kleberstrang eine rahmenartige Schicht (7) aus einem lichtundurchlässigen Material angeordnet ist und der Kleberstrang aus einem Material besteht, das die Wasserdampfdiffusion in die Zwischenschicht verhindert und so dimensioniert ist, daß er in Kontakt mit der Umfangsfläche der inneren Glasscheibe (2) steht und für den Einbau der Glasscheibe in die Karosserie durch Verklebung dienen kann.

2. Verbundglasscheibe nach Anspruch 1, dadurch gekennzeichnet, daß die rahmenartige Schicht (7) aus einer Einbrennfarbe besteht, die durch Siebdruck aufgebracht werden kann.

3. Verbundglasscheibe nach Anspruch 2, dadurch gekennzeichnet, daß die verwendete Einbrennfarbe gegenüber dem Kleberstrang (10, 20, 30) bessere Hafteigenschaften aufweist als das Glas.

4. Verbundglasscheibe nach einem der Ansprüche 1 bis 3, dadurch gekennzeichnet, daß der Kleberstrang (10, 20, 30) aus einem Kunststoff besteht, der vor dem Einbau der Glasscheibe in die Karosserie reaktiviert werden kann.

5. Verbundglasscheibe nach einem der Ansprüche 1 bis 4, dadurch gekennzeichnet, daß die rahmenartige Schicht (7) mit einem Haftvermittler (29) versehen ist und daß der Kleberstrang (30) gegebenenfalls den Randbereich der inneren Einzelglasscheibe (2) überdeckt, aus einem nach dem Aufbringen schnell aushärtenden Material besteht, zwei in Richtung auf den Fahrgastraum gerichtete Stege (27) und (28) aufweist und beim Einbau der Glasscheibe in einen Fensterrahmenfalz durch Verkleben als Zwischenstrang dient.

6. Verbundglasscheibe nach einem der Ansprüche 1 bis 5, dadurch gekennzeichnet, daß die zwischen den beiden Einzelglasscheiben (1, 2) angeordnete Zwischenschicht (13) kleiner als die innere Einzelglasscheibe (2) ist, so daß eine umlaufende Nut (14) gebildet wird, in die ein Teil des Kleberstrangs (20) eindringt.

7. Verbundglasscheibe nach einem der Ansprüche 1 bis 6, dadurch gekennzeichnet, daß der Kleberstrang (10, 20, 30) mit einer abziehbaren Schutzfolie abgedeckt ist.

8. Verbundglasscheibe nach einem der Ansprüche 1 bis 7, dadurch gekennzeichnet, daß die Umfangsfläche (5) der äußeren Einzelglasscheibe (1) ein abgerundetes Profil aufweist.

9. Verfahren zum Einbauen einer Glasscheibe nach einem der Ansprüche 1 bis 8 in den Rahmenfalz einer Karosserie durch Verkleben mit dem Befestigungsflansch (22) der Karosserie mit Hilfe einer die Befestigung der Glasscheibe in der Karosserie erlaubenden Kleberschicht (24), dadurch gekennzeichnet, daß die Kleberschicht auf den Befestigungsflansch der Karosserie und/oder auf den Kleberstrang (10, 20, 30) aufgebracht und die Glasscheibe in den Rahmenfalz eingesetzt wird, wobei die Kleberschicht ein Lösungsmittel enthält und sich für die Haftung an dem Kleberstrang eignet, so daß sie den Kleberstrang anlöst und mit diesem eine dauerhafte Verbindung eingeht.

Fig.1

Fig.2

Fig.3

**Fig.4**

# Fig.5